(19) Europäisches Patentamt
European Patent Office
Office européen des brevets

(11) Publication number: **0 291 915 B1**

# EUROPEAN PATENT SPECIFICATION

(45) Date of publication of patent specification: **02.11.95**

(51) Int. Cl.⁶: **C08K 5/13**, C08K 5/49, C08L 25/06, D01F 6/22

(21) Application number: **88107850.5**

(22) Date of filing: **17.05.88**

The file contains technical information submitted after the application was filed and not included in this specification

(54) **Styrene-based resin composition and moldings produced from said composition.**

(30) Priority: **18.05.87 JP 118880/87**
**14.01.88 JP 4921/88**
**14.01.88 JP 4922/88**
**14.01.88 JP 4924/88**

(43) Date of publication of application:
**23.11.88 Bulletin 88/47**

(45) Publication of the grant of the patent:
**02.11.95 Bulletin 95/44**

(84) Designated Contracting States:
**BE CH DE FR GB IT LI NL SE**

(56) References cited:
**EP-A- 210 615**
**FR-A- 2 145 214**
**US-A- 3 622 530**

**CHEMICAL ABSTRACTS, vol. 108, no. 18, 2nd May 1988, abstract no. 151633h,Columbus, Ohio, US; & JP-A-62 257 948**

**PLASTICS ENGINEERING, vol. 32, no. 10, October 1976, pages 51-57; G.K. COWELLet al.: "Additives for plastics-antioxidants"**

(73) Proprietor: **IDEMITSU KOSAN COMPANY LIMITED**
**1-1, Marunouchi 3-chome**
**Chiyoda-ku**
**Tokyo 100 (JP)**

(72) Inventor: **Ijitsu, Toshikazu**
**2-24-32, Nagauraekimae**
**Sodegaura-machi**
**Kimitsu-gun**
**Chiba-ken (JP)**
Inventor: **Uchida, Hiroshi**
**975-43, Fukumasu**
**Ichihara-shi**
**Chiba-ken (JP)**
Inventor: **Komeiji, Azuma**
**1-16-15, Kannou**
**Sodegaura-machi**
**Kimitsu-gun**
**Chiba-ken (JP)**
Inventor: **Funaki, Keisuke**
**216, Imazuasayama**
**Ichihara-shi**
**Chiba-ken (JP)**

CHEMICAL ABSTRACTS, vol. 108, no. 18, 2nd
May 1988, abstract no. 151651n,Columbus,
Ohio, US; & JP-A-62 257 950

Inventor: **Sumitomo, Takashi**
**892, Anesaki**
**Ichihara-shi**
**Chiba-ken (JP)**
Inventor: **Nakano, Akikazu**
**216, Imazuasayama**
**Ichihara-shi**
**Chiba-ken (JP)**


(74) Representative: **Türk, Gille, Hrabal, Leifert**
**Brucknerstrasse 20**
**D-40593 Düsseldorf (DE)**

**Description**

(1) Field of the Invention

The present invention relates to a styrene-based resin composition comprising a styrene-based polymer having mainly a syndiotactic configuration and a specified antioxidant, a fibrous molding produced by spinning said composition and a molding produced by stretching said composition.

More specifically, the present invention relates to a styrene-based resin composition having excellent heat stability. This invention is hereinafter referred to as the "first invention". The styrene-based resin composition of the first invention can be used widely and effectively as heat resistant structural materials and further as various industrial materials, mechanical part materials and so on for which heat resistance is required.

The present invention further relates to a fibrous molding produced from the composition of the first invention, which is excellent in heat resistance and chemical resistance and thus can be used effectively as a heat resistant fiber, a marine material, a material for use in production of apparatuses for chemicals, and so on. This invention is hereinafter referred to as the "second invention".

The present invention further relates to a molding produced from the composition of the first invention, which is excellent in heat resistance and mechanical strength and thus can be used in various applications, such as in production of electric materials wrapping films, car parts and so on. This invention is hereinafter referred to as the "third invention".

(2) Description of the Related Art

Styrene-based polymers are generally divided into three groups depending on the configuration thereof: isotactic, syndiotactic and atactic. It is known that a styrene-based polymer having an atactic configuration is obtained by the usual radical polymerization method, and a styrene-based polymer having an isotactic configuration is obtained by using a Ziegler-type catalyst. In general, a styrene-based resin having an atactic configuration has been used.

The present applicant has developed a styrene-based polymer having a syndiotactic configuration which is obtained by using a titanium compound and a water modified organoaluminum compound (Japanese Patent Application Laid-Open No. 104818/1987). This styrene-based polymer having a syndiotactic configuration is needed to mold at elevated temperatures in thermal molding thereof, because it has an especially high melting point as compared with styrene polymers having the other configurations. This molding at high temperatures, however, causes a reduction in molecular weight due to thermal decomposition of the polymer and thus reducing mechanical properties of the polymer.

In order to prevent the reduction in mechanical properties during thermal decomposition of the styrene polymer during molding thereof, a method of adding a triphosphite and a phenolic antioxidant to the styrene polymer (usually having an atactic configuration) and a method of adding a triphosphite, a diphosphite and a phenolic antioxidant to the styrene polymer have heretofore been known.

These antioxidants commonly used in atactic polystyrene, however, undergo evaporation and thermal decomposition at a temperature at which syndiotactic polystyrene is molded and, therefore, they are not effective when used as such in syndiotactic polystyrene.

It has now been found that if a specified antioxidant is added to a styrene polymer having a syndiotactic configuration, a styrene-based resin composition having excellent heat resistance results. Based on the findings, the first invention has been completed.

A fibrous molding has heretofore been produced from a thermoplastic resin. Such thermoplastic resins include polyethylene, polypropylene, polyethylene terephthalate, polyamide and so on. Any of these thermoplastic resins, however, are not satisfactorily high in heat resistance, chemical resistance and so on. Moreover they have disadvantages in that many of them are usually subject to influences of steam and others are expensive.

A styrene-based polymer having a syndiotactic configuration having been recently developed has advantages in that the starting materials are inexpensive, the melting point is high and chemical resistance is excellent.

However a fibrous molding has not been produced from such styrene-based polymers having excellent properties.

The present applicant has proposed stretched materials such as mats and strands (Japanese Patent Application No. 222092/1986). However, extensive investigations have not been made on production of fibers.

It has been found that a fiber produced from a styrene-based polymer having a syndiotactic configuration which contains a specific antioxidant, by various spinning methods has desired heat resistance and chemical resistance. Based on the findings, the second invention has been completed.

Compounding other resins, rubber, or an inorganic filler, or stretching has been applied for the purpose of improving thermal properties and mechanical properties of polymers. Particulaly for a styrene-based polymer, these techniques are widely applied because they are generally poor in impact resistance.

That is, a styrene-based polymer which has heretofore been in general use is obtained by radical polymerization, and its configuration is atactic and further it is amorphous. Thus the impact resistance and mechanical strength of the styrene-based polymer are not sufficiently high. In order to overcome these problems, other resins have been compounded to the styrene polymer, but the effect of improvement is not sufficiently high. Moreover, since the styrene-based polymer is atactic configuration, an improvement of physical properties thereof due to strain-induced crystallization cannot be expected.

A styrene-based polymer the configuration of which is isotactic is also known, and an attempt to stretch such isotactic styrene polymers have been made (Kobunshi Kagaku (Polymer Chemistry), 21, 206 (1964)). However, since the styrene-based polymer is slow in a crystallization rate and its crystal structure is spiral, a substantially sufficient stretching effect cannot be obtained.

The present inventors have made extensive investigations in order to overcome the above problems. In the course of the investigations, since a styrene-based polymer of high syndiotacticity which has been developed by the present applicant (Japanese Patent Application Laid-Open No. 104818/1987) has a high melting point (160 to 310°C), compounding other resins and so on, or stretching has been attempted. For example, (1) blending a styrene-based polymer having a syndiotactic configuration and a thermoplastic resin (Japanese Patent Application Laid-Open No. 257950/1987), (2) a composition comprising a styrene-based polymer having a syndiotactic configuration and an inorganic filler (Japanese Patent Application Laid-Open No. 257948/1987), have been proposed.

However, the above composition containing a styrene-based polymer having a syndiotactic configuration and the stretched product cannot be said to have satisfactory properties when thermal properties and mechanical strength of stretched films and bottles in practical use as porduced by film molding and blow molding are taken into consideration.

Thus the third invention is intended to overcome the above problems and to provide a styrene-based resin composition having excellent heat resistance and mechanical strength.

SUMMARY OF THE INVENTION

The first invention relates to a styrene-based resin composition comprising (A) a styrene-based polymer having mainly a sydiotactic configuration as resin component and
(B) as antioxidant component a phosphorus-containing antioxidant selected from bis-(2,4-di-tert-butyl-phenyl)pentaerythritol diphosphite, bis-(2,6-di-tert-butyl-4-methylphenyl)pentaerythritol diphosphite, tris-(2,4-di-tert-butylphenyl)phosphite and tetrakis-(2,4-di-tert-butylphenyl)-4,4'-bisphenylene diphosphite, and trialkyl phenol as a phenolic antioxidant wherein the total amount of the phosphorus-containing antioxidant and the phenolic antioxidant compounded is 0,005 to 5 parts by weight per 100 parts by weight of the styrene-based polymer, and the weight ratio of the phosphorus-containing antioxidant to the phenolic antioxidant is 100:1 to 0,3:1.

The second invention relates to a fibrous molding produced by spinning the styrene-based resin composition of the first invention.

The third invention relates to a molding produced by stretching the styrene-based resin composition of the first invention.

DESCRIPTION OF THE PREFERRED EMBODIMENTS

The first invention will hereinafter be explained.

In the first invention, a styrene-based polymer having mainly a syndiotactic configuration is used as the resin component (A).

The styrene-based polymer having mainly a syndiotactic configuration means a polymer having a configuration that with respect to a main chain comprising a carbon-carbon bond, phenyl groups or substituted phenyl groups as side chains are positioned alternately in the opposite directions. The tacticity is determined by the nuclear magnetic resonance method using a carbon isotope (the $^{13}$C-NMR method). The tacticity as determined by the $^{13}$C-NMR method can be indicated in proportions of the configuration neighboring constitutional units continuously bonded together, for example, diad when two units are continuously bonded together, triad when three units are continuously bonded together, and pentad when five units are continuously bonded together. The styrene-based polymer having mainly a syndiotactic configuraiton to be used in the first invention includes polystyrene, poly(alkylstyrene), poly(halogenated styrene), poly(alkoxystyrene), poly(vinyl benzoate) and their mixtures, and copolymers containing the above monomer as the main component, each usually having a syndiotacticity that the diadded is at least 75% and preferably at least 85%, or the pentadd (racemic pentadd) is at least 30% and preferably at least 50%.

Typical examples of the poly(alkylstyrene) are polymethylstyrene,polyethylstyrene polyisopropylstyrene, and poly-tert-butylstyrene. Typical examples of the poly(halogenatedstyrene) are polychlorostyrene, polybromostyrene and polyfluorostyrene. Typical examples of the poly(alkoxystyrene) are polymethoxystyrene and polyethoxystyrene. Particularly preferred examples of the styrene-based polymers are polystyrene, poly-p-methylstyrene, poly-m-methylstyrene, poly-p-tert-butylstyrene, poly-p-chlorostyrene, poly-m-chlorostyrene, poly-p-fluorostyrene, and a copolymer of styrene and p-methylstyrene.

The styrene-based polymer to be used in the first invention varies in molecular weight. The weight average molecular weight of the styrene-based polymer is preferably at least 10,000 and particularly preferably at least 50,000. If the weight average molecular weight is less than 10,000, the styrene-based polymer is not sufficiently high in heat resistance and mechanical strength, and the resulting composition is not sufficiently improved in heat resistance and mechanical strength.

The styrene-based polymer to be used in the first invention is not critical in a distribution of moleuclar weight, and those having various distributions of molecular weight can be used.

The styrene-based polymer having mainly a syndiotactic configuration to be used as the component (A) has a melting point of 160 to 310°C, and thus is markedly superior in heat resistance to conventional styrene-based polymers having an atactic configuration.

The above styrene-based polymer having mainly a syndiotactic configuration can be prepared, for example, by polymerizing a styrene-based monomer (corresponding to the above styrene-based polymer) by the use of a catalyst comprising a titanium compound and a condensate of water and trialkyl aluminum in an inert hydrocarbon solvent or in the absence of a solvent (Japanese Patent Application Laid-Open No. 187708/1987).

In the first invention, as the antioxidant (B), a phosphorus-containing antioxidant and a phenolic antioxidant are used. As the phosphorus-containing antioxidant, a specific monophosphite and certain diphosphites, are used. The monophosphite is tris(2,4-di-tert-butylphenyl) phosphite. As the diphosphite, bis(2,4-di-tert-butylphenyl)pentaerythritol diphosphite, bis(2,6-di-tert-butyl-4-methylphenyl)pentaerythritol diphosphite, tetrakis(2,4-di-tertbutylphenyl)-4,4'-bisphenylene diphosphite, can be used.

As the phenolic antioxidant, trialkylphenol can be used.

Representative examples of the trialkylphenol include 2,6-di-tert-butyl-4-methylphenol, 2,2'-methylenebis(6-tert-butyl-4-ethylphenol), 2,2'-methylenebis[4-methyl-6-($\alpha$-methylcyclohexyl)phenol],2,2'-methylenebis-(4-methyl-6-nonylphenol), 1,1,3-tris(5-tert-butyl-4-hydroxy-2-methylphenyl)butane, ethylene glycol bis[3,3-bis(3-tert-butyl-4-hydroxyphenyl)butylate],1,1-bis(3,5-dimethyl-2-hydroxyphenyl)-3-(n-dodecylthio)-butane, 1,3,5-tris-(3,5-di-tert-butyl-4-hydroxybenzyl)-2,4-6-trimethylbenzene, 2,2-bis-(3,5-di-tert-butyl-4-hydroxybenzyl)malonic acid dioctadecyl ester, n-octadecyl-3-(4-hydroxy-3,5-di-tert-butylphenyl)propionate, tetrakis[methylene(3,5-di-tert-butyl-4-hydroxyhydrocinnamate)]methane, 3,9-bis[1,1-dimethyl-2-{$\beta$-(3-tert-butyl-4-hydroxy-5-methylphenyl)-propionyloxy}ethyl-2,4,8,10-tetraoxaspiro[5,5]undecane and tris-(3,5-di-tert-butyl-4-hydroxybenzyl)-isocyanurate.

Of the above compounds, as the phenolic antioxidant, n-octadecyl-3-(4-hydroxy-3,5-di-tert-butylphenyl)-propionate, tetrakis[methylene(3,5-di-tert-butyl-4-hydroxyhydrocinnamate)]methane, 3,9-bis[1,1-dimethyl-2-{$\beta$-(3-tert-butyl-4-hydroxy-5-methylphenyl)propionyloxy}ethyl-2,4,8, 10-tetraoxaspiro[5,5]undecane, and tris-(3,5-di-tert-butyl-4-hydroxybenzyl)-isocyanurate are preferred.

In the first invention, the above phosphorus-containing antioxidant and phenolic antioxidant are added to the styrene-based polymer having mainly a syndiotactic configuration as the resin component (A) in such a manner that the total amount of the phosphorus-containing antioxidant and the phenolic antioxidant is 0.005 to 5 parts by weight, preferably 0.01 to 1 part by weight per 100 parts by weight of the styrene-based polymer. If the amount of the antioxidant component (B) compounded is less than 0.005 part by weight, no sufficient oxidation prevention effect can be obtained and the molecular weight drops. On the other hand, if it is more than 5 parts by weight, adverse influences are exerted on the mechanical properties, heat resistance and appearance.

The weight ratio of the phosphorus-containing antioxidant to the phenolic antioxidant is 100:1 to 0.3:1 and preferably 10:1 to 0.5:1.

The phosphorus-containing antioxidant has an ability to decompose peroxides and further has an ability to reproduce the phenolic antioxidant. If the amount of the phosphorus-containing antioxidant added is less than the above range, the effect of reproducing the phenolic antioxidant is sometimes poor.

The styrene-based resin composition of the present invention basically comprises the aforementioned components. The antioxidant component (B) may further contain a sulfur-containing antioxidant.

As the sulfur-containing antioxidant, thioether-based antioxidants are preferred. Representative examples are dilauryl-3,3'-thiodipropionate, dimyristyl-3,3'-thiodipropionate, distearyl-3,3'-thiodipropionate, pentaerythritol tetrakis-($\beta$-lauryl-thiopropionate), bis[2-methyl-4-{3-n-alkylthiopropionyloxy}-5-tert-butylphenyl]-sulfide and 2-mercaptobenzoimidazole. Of these compounds, pentaerythritol-tetrakis-($\beta$-lauryl-thiopropionate) is preferred.

The amount of the sulfur-based antioxidant compounded is 0.0001 to 1 part by weight, preferably 0.001 to 0.5 parts by weight per 100 parts by weight of the styrene-based polymer having mainly a syndiotactic configuration.

When the phosphorus-containing antioxidant, the phenolic antioxidant and the sulfur-containing antioxidant are used, the ratio of the phosphorus-containing antioxidant to the sulfur-containing antioxidant to the phenolic antioxidant (phosphorus-containing antioxidant/sulfur-containing antioxidant/phenolic antioxidant) is 100:10:1 to 0.3:1:1 and preferably 50:10:1 to 0.5:1:1 and more preferably 10:10:1 to 1:1:1. The phosphorus-containing antioxidant and the sulfur-containing antioxidant have an ability to decompose peroxides and further have an ability to reproduce the phenolic antioxidant. If, however, the amount of the phosphorus-containing antioxidant and the sulfur-containing antioxidant is less than the above range, the effect of reproducing the phenolic antioxidant is sometimes low. The sulfur-containing antioxidant has a lower peroxide decomposition speed than the phosphorus-containing antioxidant, but its peroxide decomposition efficiency per molecule is high. Thus, when the sulfur-containing antioxidant is added, an excellent oxidation preventing effect can be obtained. When the above three antioxidants are used in combination, a styrene-based resin composition having markedly high heat stability is obtained.

In the first invention, when the above three antioxidants are used in combination as the antioxidant component (B), as the resin component (A), not only a styrene-based polymer alone but also a mixture of the styrene-based polymer and a thermoplastic resin and/or rubber may be used.

The above thermoplastic resin means a thermoplastic resin other than the styrene-based polymer having mainly a syndiotactic configuration.

As the above thermoplastic resin, various resins can be used according to application of the composition. For example, styrene-based polymers such as polystyrene having an atactic configuration, polystyrene having an isotactic configuration, an AS resin and an ABS resin can be used. In addition, polyesters such as polyethylene terephthalate, polycarbonate, polyethers such as polyphenyleneoxide, polysulfone and polyethersulfone, condensed polymers such as polyamide, polyphenylenesulfide (PPS) and polyoxymethylene, acryl-based polymers such as polyacrylic acid, polyacrylate and polymethyl methacrylate, polyolefins such as polyethylene, polypropylene, polybutene, poly(4-methylpentene-1) and an ethylene propylene copolymer, halogen-containing vinyl compound polymers such as polyvinyl chloride, polyvinylidene chloride, and polyvinylidene fluoride can be used.

Of the above polymers, polystyrene having an atatic configuration, specifically general purpose polystyrene having a weight average molecular weight of 50,000 to 500,000 and a density of 1.04 to 1.065 g/cm$^3$, an ABS resin, polyester, specifically polyethylene terephthalate having an intrinsic viscosity [$\eta$] of 0.4 to 1.5 dl/g, preferably 0.5 to 1.4 dl/g, a density of 1.33 to 1.40 g/cm$^3$ and a melting point of 255 to 260°C, polycarbonate, specifically polycarbonate having a viscosity average molecular weight of 20,000 to 40,000, and a density of 1.19 to 1.22 g/cm$^3$, polyether, specifically polyphenylene oxide having a weight average molecular weight of 5,000 to 10,000 and a density of 1.05 to 1.07 g/cm$^3$ are suitable.

As the rubber, various types of rubbers can be used. The most suitable is a rubber-like copolymer containing a styrene-based compound as a component thereof. Examples are rubber (SEBS) in which the butadiene portion of a styrene-butadiene block copolymer is partially or completely hydrogenated, styrene-butadiene copolymer rubber (SBR), methyl acrylate-butadiene-styrene copolymer rubber, acrylonitrile-butadiene-styrene copolymer rubber (ABS rubber), acrylonitrile-alkyl acrylate-butadiene-styrene copolymer rubber (AABS), methyl methacrylate-alkyl acrylate-styrene copolymer rubber (MAS), and methyl methacrylate-alkyl acrylate-butadiene-styrene copolymer rubber (MABS). Since these rubber-like copolymers containing a styrene-based compound as a component contains a styrene unit, its dispersibility in a styrene-based polymer having mainly a syndiotactic structure is good. Thus it has a markedly high effect to improve physical properties.

Other examples of rubbers which can be used include natural rubber, polybutadiene, polyisoprene, polyisobutylene, neoprene, ethylene-propylene copolymer rubber, polysulfide rubber, thiokol rubber, acryl rubber, urethane rubber, silicone rubber, epichlorohydrin rubber, polyether-ester rubber and polyester-ester rubber.

In a case where the above mixture is used, the thermoplastic resin and/or the rubber is added in an amount 1 to 200 parts by weight, preferably 5 to 160 parts by weight and more preferably 25 to 120 parts by weight per 100 parts by weight of the styrene-based polymer having mainly a syndiotactic configuration. If the thermoplastic resin and/or the rubber compounded is less than 1 part by weight, there is no significant difference between the resulting mixture and the styrene-based polymer alone, having mainly a syndiotactic configuration. On the other hand, if it is more than 200 parts by weight, an improvement in mechanical and thermal properties due to the styrene-based polymer having mainly a syndiotactic configuration cannot be expected.

In the first invention, when the phosphorus-containing anitoxidant and the phenolic antioxidant are used as the antioxidant component (B), a mixture of a styrene-based polymer having mainly a syndiotactic configuration and rubber or a mixture of a styrene-based polymer having mainly a syndiotactic configuration, rubber and a thermoplastic resin may be used. As the rubber or the thermoplastic resin, those as listed above can be used.

When the above mixture is used, the rubber, or rubber and the thermoplastic resin is added in an amount of 1 to 200 parts by weight, preferably 5 to 160 parts by weight and more preferably 25 to 120 parts by weight per 100 parts by weight of the styrene based polymer having mainly a syndiotactic configuration. If the amount of the rubber, or rubber and the thermoplastic resin compounded is less than 1 part by weight, there is no significant difference between the resulting mixture and the styrene-based polymer alone, having mainly a syndiotactic configuration. On the other hand, if it is more than 200 parts by weight, an improvement in mechanical and thermal properties due to the styrene-based polymer having mainly a syndiotactic configuration cannot be expected.

The composition of the first invention basically comprises the aforementioned components. If necessary, an inorganic filler and various additives can be added.

As the inorganic filler, various compounds can be used. The inorganic filler can be chosen appropriately according to need. More specifically, glass fibers, carbon fibers, alumina fibers, carbon black, graphite, titanium dioxide, silica, talc, mica, calcium carbonate, calcium sulfate, barium carbonate, magnesium carbonate, magnesium sulfate, barium sulfate, oxysulfate, tin oxide, alumina, kaolin, silicon carbide, metal powder, and their mixtures can be used.

In kneading the styrene-based polymer having mainly a syndiotactic configuration, the general thermoplastic resin, the antioxidants, and other components to be added if necessary to prepare the composition of the first invention, suitable kneading conditions are chosen. In general, they are melt kneaded by the use of a Banbury mixer, a Henschel mixer, and a kneading roll.

The second invention will hereinafter be explained.

The second invention provides, as described above, a fibrous molding produced by spinning the styrene-based composition of the first invention.

The resin composition to be used in production of the fibrous molding of the second invention basically comprises (A) the styrene-based polymer having mainly a syndiotactic configuration and (B) the antioxidant. If necessary, other thermoplastic resins and various additives may be compounded thereto. They are the same as in the first invention except that they are added in amount of 0.01 to 30 parts by weight, preferably 0.1 to 25 parts by weight per 100 parts by weight of the syndiotactic styrene-based polymer.

As the additives, a lubricant, an oxidation stabilizer and an inorganic filler which have been used in order to increase spinning properties, stability and mechanical strength can be compounded.

The fibrous molding of the second invention is produced by spinning the aforementioned composition. As the spinning method, both melt spinning and wet spinning can be employed.

In the case of melt spinning, the composition is melted by heating to more than its melting point, preferably the temperature range from the melting point to the decomposition temperature and extruding through a fine nozzle.

In the case of wet spinning, the composition is dissolved in a solvent, gelled at the top of a nozzle and extruded. As the solvent to be used in the wet spinning, benzene, toluene, xylene, ethylbenzene, cyclohexane, decalin, N-methylpyrolidone, tetrahydrofuran, carbon tetrachloride, 1,1,2,2-tetrachloroethane, chloroform, dichloromethane, monochlorobenzene, dichlorobenzene, trichlorobenzene and trichlene can be used.

The fibrous molding of the second invention (hereinafter sometimes referred to merely as a "fiber") is obtained as described above, which may be further subjected to stretching and heat treatment if necessary.

The method of stretching is not critical. For example, the fiber obtained by melt spinning can be stretched by controlling a winding speed, guide rollers and an extrusion speed. On the other hand, the fiber obtained by wet spinning can be stretched in a wet condition in the same manner as in melt spinning.

The fiber obtained by the above methods can be stretched by again heating.

This stretching provides the fiber with more increased mechanical and thermal properties.

The rate of stretching is usually at least two times, especially at least three times.

Furthermore the fiber thus obtained can be subjected to heat treatment at a temperature from the glass transition temperature of the fiber to the melting point of the fiber, preferably within the temperature range of from 20°C higher than the glass transition temperature to the melting point. By application of the heat treatment, heat resistance and chemical resistance of the fiber is more increased.

The fibrous molding thus obtained has a diameter (width) of 0.0001 to 2 mm and preferably 0.001 to 0.5 mm.

The third invention will hereinafter be explained.

The third invention, as described above, provides a molding obtained by stretching the styrene-based resin composition of the first invention.

The styrene-based resin composition to be used in the production of the molding of the third invention basically comprises (A) a styrene-based polymer having mainly a syndiotactic configuration and (B) an antioxidant and if necessary,it may further contain other thermoplastic resins, rubber, an inorganic filler and various additives. They are the same as described in the first invention.

That is, the styrene-based resin composition to be used in the third invention includes the styrene-based resin composition of the first invention and the styrene-based resin composition of the first invention in which the resin component (A) further contains a thermoplastic resin and/or rubber. As the thermoplastic resin and the rubber, those listed in the first invention can be used, and the amount of the thermoplastic resin or rubber compounded is the same as in the first invention.

The styrene-based resin composition to be used in the third invention may be a composition which contains (C) an inorganic filler in addition to the styrene-based composition of the first invention, and further it may be the styrene-based resin composition in which the resin component (A) contains a thermoplastic resin and/or rubber.

The inorganic filler (C) is not critical in form; that is, it may be fibrous, granular or powdery. Examples of fibrous inorganic fillers include glass fibers, carbon fibers and alumina fibers. Particulary preferred are glass fibers and carbon fibers. The form of the glass fiber includes a cloth form, a mat form, a bundle cut form, a short fiber form and a filament form. It is preferred for the glass fiber to be of the bundle cut form and to have a length of 0.03 to 13 mm and a fiber diameter of 5 to 15 $\mu$m. Particulary preferably the glass fiber is subjected to silane treatment.

As the carbon fiber, a polyacrylonitrile (PAN)-based fiber is preferred. More preferably the carbon fiber is of the chopped fiber type and is a bundle of fibers each having a length of about 3 mm and a diameter of 7 to 15 $\mu$m.

As the granular or powdery inorganic filler, talc, carbon black, graphite, titanium dioxide, silica, mica, calcium carbonate, calcium sulfate, barium sulfate, magnesium carbonate, magnesium sulfate, barium sulfate, oxy sulfate, tin oxide, alumina, kaolin, silicon carbide and metal powder can be used. Talc, particularly having an average particle diameter of 0.3 to 2 $\mu$m is preferred.

The amount of the component (C) compounded is 0.001 to 10 parts by weight, preferably 0.03 to 5 parts by weight and more preferably 0.05 to 3 parts by weight per 100 parts by weight of the component (A). If the amount of the component (C) compounded is less than 0.001 part by weight, the crystallization accelerating and strength increasing effects cannot be obtained even if the inorganic filler is added. On the other hand, if it is more than 10 parts by weight, break-down occurs at the time of stretching and no uniform molding can be obtained.

The resin composition of the third invention is composed of the components (A) and (B), or the components (A), (B) and (C) as described above. If necessary, a metal inert agent, an ozone degradation preventing agent and a synergist may be added to the resin composition of the third invention, alone or in combination with one another. In addition, a compatibilizing agent and a lubricant can be added if necessary.

The composition of the third invention is prepared by kneading the aforementioned components by the use of a kneader, a mixing roll, an extruder, or by solution blending.

The molding of the third invention is obtained by stretching the above styrene-based resin composition.

The molding of the third invention is usually obtained by molding the above composition by extrusion molding or calendering to produce a sheet for stretching, and then stretching the sheet. As the sheet for stretching, there can be used a dry mat or a wet mat which is obtained by dissolving the above components in a suitable solvent and casting or gelling the resulting solution. The type of the solvent is chosen depending on the type of the composition. For example, benzene, toluene, xylene, ethylbenzene, cyclohexane, decaline, N-methylpyrrolidone, tetrahydrofuran, carbon tetrachloride, chloroform, dichloromethane, tetrachloroethane, monochlorobenzene, dichlorobenzene and trichlorobenzene can be used.

The thickness of the sheet is determined appropriately; it may be several ten micrometers or more than 500 $\mu$m. For this sheet, it is preferred for the degree of crystallization to be as low as possible. Particularly when a sheet having a high thickness is molded, it is desirable that the sheet be quickly cooled at the time of molding.

As the stretching method, any of (1) heat stretching, (2) gel stretching and (3) wet stretching can be employed. In the gel stretching or wet stretching, as the solvent, benzene, toluene, xylene, ethylbenzene, cyclohexane, decaline, N-methylpyrolidone, tetrahydrofuran, carbon tetrachloride, 1,1,2,2-tetrachloroethane, chloroform, dichloromethane, monochlorobenzene, dichlorobenzene, trichlorobenzene and trichlene can be used.

In the case of the heat stretching, both uniaxial stretching and biaxial stretching can be employed. In the biaxial stretching, stretching may be carried out simultaneously in the machine direction and the transverse direction, or stretching may be carried out sequentially.

In the third invention, it is particularly preferred that the aforementioned sheet be heat stretched.

In the stretching of the sheet, the sheet is uniaxially or biaxially stretched while heating at a temperature from the second order transition temperature to a temperature 10°C lower than the melting point. In the case of uniaxial stretching, the sheet is stretched to at least 1.1 times, preferably 3 to 10 times the original length in the stretching direction. In the case of biaxial stretching, the sheet is stretched to at least 1.1 times, preferably 3 to 10 times the original length in each stretching direction. If the stretching ratio is too small, the resulting molding such as a sheet, a film or a tape is not sufficiently improved in physical properties.

In the third invention, particularly when biaxial stretching is applied, the above composition can be directly subjected to inflation molding without formation of the sheet to produce a biaxially stretched molding (e.g., a biaxially stretched film). In this inflation molding, it is effective for preventing melt fracture and surface roughening that the resin temperature be maintained at a temperature at least 20°C higher than the melting point. In inflation molding, uniaxial stretching is possible if the blow up ratio is made small.

By carrying out uniaxial stretching or biaxial stretching according to the third invention, a stretched molding having excellent physical properties is obtained. This molding can be further subjected to heat treatment after stretching. This heat treatment is achieved by heating the stretched molding in a tension state within the temperature range of a temperature about 10°C higher than the second order transition temperature (glass transition temperature) to the melting point. This heat treatment increases heat resistance and dimensional stability of the stretched molding more.

As described above, the effect of preventing the reduction in molecular weight due to molding at high temperatures in the composition of the first invention is greater than those in the conventional styrene-based resin compositions. Thus the composition has good heat stability and can be used widely and effectively as a material in applications where high heat resistance and high chemical resistance are required.

The fibrous molding of the second invention maintains heat resistance inherent of the styrene-based polymer having mainly a syndiotactic configuration, is insoluble in main acids, alkalis and organic solvents, and is greatly improved in chemical resistance. Thus the fibrous molding of the second invention is widely and effectively used in various applications exemplified by a heat resistant fiber. Furthermore the fibrous molding of the second invention is utilized as a material for unwoven fabrics which possess shrink-preventing properties, water resistance, chemical resistance, gas permeability and are light weight.

In accordance with the third invention, a styrene-based resin molding, such as a film, a sheet and a tape, which is excellent in heat resisatnce and mechanical strength such as tensile modulus and tensile strength can be obtained. Furthermore, in the third invention, when an inorganic filler is added, there can be obtained a molding having a more increased heat resistance. The molding obtained by the third invention can be widely and effectively used as an electric or electronic material such as a magnetic recording tape or a disc, a condenser, or a wrapping material.

[Examples]

The following examples will further illustrate the present invention.

Preparation Example 1 (Preparation of polystyrene having syndiotactic configuration)

In toluene solvent 8 $\ell$ of styrene was polymerized in the presence of a catalyst comprising 2.67 mmol of tetraethoxytitanium and 267 mmol (in terms of aluminium atom) of methylaluminoxane at 40°C for 2.5 hours. The polymer thus obtained was washed and, then dried. The yield of the polymer was 490 g. Then the polymer was subjected to Soxhlet's extraction with methyl ethyl ketone to obtain 97 wt.% of the extraction residue.

The polymer thus obtained as the extraction residue had a weight average molecular weight of 1,500,000 and a melting point of 270°C. In the analysis by nuclear magnetic resonance ($^{13}$C-NMR) method of isotopic carbon, an absorption owing to the syndiotactic configuration was observed at 145.35 ppm. The syndiotacticity (pentad) calculated from the peak area was 96 %.

Example 1

One hundred parts by weight of the polystyrene prepared in the above Preparation Example 1 was dry-blended with 0.5 part by weight of bis(2,4-di-t-butyl-phenyl)pentaerythritol diphosphite as the phosphorus-containing antioxidant and 0.2 part by weight of n-octadecyl-3-(4-hydroxy-3,5-di-t-butylphenyl)propionate as the phenolic antioxidant. Then the mixture was kneaded at 300°C in the air for 2 min and extruded. The weight-average molecular weight of the thus obtained extrusion moldings was determined according to gel permeation chromatography using 1,2,4-trichlorobenzene as the solvent at 135°C. The results are shown in Table 1.

Example 2

The same procedure as in Example 1 was repeated except that 0.2 part by weight of tetrakis-[methylene(3,5-di-t-butyl-4-hydroxyhydrocinnamate)]methane was used as the phenolic antioxidant. The results are shown in Table 1.

Example 3

The same procedure as in Example 1 was repeated except that 0.5 part by weight of bis(2,6-di-t-butyl-4-methylphenyl)pentaerythritol diphosphite was used as the phosphorus-containing antioxidant. The results are shown in Table 1.

Example 4

The same procedure as in Example 1 was repeated except that 0.5 part by weight of bis(2,6-di-t-butyl-4-methylphenyl)pentaerythritol diphosphite was used as the phosphorus-containing antioxidant and 0.2 part by weight of tetrakis[methylene(3,5-di-t-butyl-4-hydroxyhydrocinnamate)]methane was used as the phenolic antioxidant. The results are shown in Table 1.

Examples 5 to 9

The same procedure as in Example 1 was repeated except that bis(2,4-di-t-butylphenyl)pentaerythritol diphosphite as the phosphorus-containing antioxidant and tetrakis[methylene(3,5-di-t-butyl-4-hydroxyhydrocinnamate)]methane as the phenolic antioxidant were used in amounts shown in Table 1 for 100 parts by weight of the polystyrene prepared in the above Preparation Example 1 to obtain the resutls shown in Table 1.

Comparative Example 1

The same procedure as in Example 1 was repeated except that 1.0 part by weight of bis(2,4-di-t-butylphenyl)pentaerythritol diphosphite was used as the phosphorus-containing compound for 100 parts by weight of the polystyrene prepared in the above Preparation Example 1. The results are shown in Table 1.

Comparative Example 2

The same procedure as in Comparative Example 1 was repeated except that 1.0 part by weight of bis-(2,6-di-t-butyl-4-methylphenyl)pentaerythritol diphosphite was used as the phosphorus-containing compound. The results are shown in Table 1.

Comparative Example 3

The same procedure as in Comparative Example 1 was repeated except that 0.4 part by weight of n-octadecyl-3-(4-hydroxy-3,5-di-t-butylphenyl)propionate was used as the phenolic antioxidant. The results are shown in Table 1.

Comparative Example 4

The same procedure as in Comparative Example 1 was repeated except that 0.4 part by weight of tetrakis[methylene(3,5-di-t-butyl-4-hydroxyhydrocinnamate)]methane was used as the phenolic antioxidant. The results are shown in Table 1.

Comparative Example 5

The same procedure as in Comparative Example 1 was repeated except that 0.5 part by weight of 4,4-thiobis(6-t-butyl-3-methylphenol) was used as the antioxidant. The results are shown in Table 1.

Referential Example

The same procedure as in Example 1 was repeated except that no stabilizer (neither phosphorus-containing antioxidant nor phenolic antioxidant) was used. The results are shown in Table 1.

## Table 1

| | Syndiotactic polystyrene (parts by weight) | Antioxidant (parts by weight) | | | | | Weight average molecualr weight |
|---|---|---|---|---|---|---|---|
| | | Phosphorus-containing antioxidant | | Phenolic antioxidant | | Sulfur-containing antioxidant | |
| Example 1 | 100 | 0.5 | *1 | 0.2 | *3 | – | 510,000 |
| " 2 | " | 0.5 | *1 | 0.2 | *4 | – | 570,000 |
| " 3 | " | 0.5 | *2 | 0.2 | *3 | – | 520,000 |
| " 4 | " | 0.5 | *2 | 0.2 | *4 | – | 500,000 |
| " 5 | " | 0.25 | *1 | 0.3 | *4 | – | 480,000 |
| " 6 | " | 0.75 | *1 | 0.1 | *4 | – | 770,000 |
| " 7 | " | 1.0 | *1 | 0.4 | *4 | – | 750,000 |
| " 8 | " | 0.25 | *1 | 0.1 | *4 | – | 480,000 |
| " 9 | " | 0.375 | *1 | 0.05 | *4 | – | 530,000 |
| Comparative Example 1 | " | 1.0 | *1 | – | | – | 390,000 |
| " 2 | " | 1.0 | *2 | – | | – | 370,000 |
| " 3 | " | | – | 0.4 | *3 | – | 220,000 |
| " 4 | " | | – | 0.4 | *4 | – | 230,000 |
| " 5 | " | | – | – | | 0.5 *5 | 310,000 |
| Referential Example | " | | – | – | | – | 200,000 |

```
Footnote

Phosphorus-containing antioxidant:

*1; bis(2,4-di-t-butylphenyl)pentaerythritol diphosphite

*2; bis(2,6-di-t-butyl-4-methylphenyl)pentaerythritol

    diphosphite

Phenolic antioxidant:

*3; n-octadecyl-3-(4-hydroxy-3,5-di-t-butylphenyl)-

    propionate

*4; tetrakis[methylene(3,5-di-t-butyl-4-hydroxyhydro-

    cinnamate)]methane

Sulfur-containing antioxidant;

*5; 4,4'-thiobis(6-t-butyl-3-methylphenol)
```

Example 10

One hundred parts by weight of the syndiotactic polystyrene prepared in Preparation Exmaple 1 were dry-mixed with 0.5 part by weight of bis-(2,6-di-tert-butyl-4-methylphenyl)pentaerythritol diphosphite serving as the phosphorus-based antioxidant, 0.2 part by weight of tetrakis[methylene-(3,5-di-tert-butyl-4-hydroxyhydrocinnamate)]methane as the phenolic antioxidant and 0.3 part by weight of pentaerythritol tetrakis($\beta$-lauryl-thiopropionate) as the sulfur-containing antioxidant. The mixture was then kneaded together at 300°C for 2 minutes in the air, and was extruded. The weight-average molecular weight of the extrusion moldings was measured by the gel permeation chromatography (GPC) at 135°C, using 1,2,4-trichlorobenzene as the solvent. The results are shown in Table 2.

Examples 11 to 15

Experiments were carried out in a similar manner as described in Example 10, except that the type and amount of the antioxidants used were varied, as specified in Table 2. The results are set out in Table 2.

Comparative Example 6

Experimentation was conducted in a similar manner as described in Example 10, except that only the phosphorus-containing antioxidant was used as the antioxidant in an amount of 1.0 parts by weight. The results are given in Table 2.

Example 16

Fifty parts by weight of the syndiotactic polystyrene prepared in Preparation Example 1 were blended with 50 parts by weight of atactic polystyrene (manufactured by Idemitsu Petrochemical Co., Ltd. and available in the trade name of Idemitsu Polystyrene US-305) that was a thermoplastic resin, and the blend was dry-mixed with 0.5 part by weight of bis(2,6-di-tert-butyl-4-methylphenyl)-pentaerythritoldiphosphite serving as the phosphorus-containing antioxidant, 0.2 part by weight of tetrakis[methylene-(3,5-di-tert-butyl-4-hydroxyhydrocinnamate)]methane as the phenolic antioxidant and 0.3 part by weight of pentaerythritol-

tetrakis($\beta$-lauryl-thiopropionate) as the sulfur-containing antioxidant. Then, the mixture was kneaded together at 300°C for 2 minutes in the air and extruded, and the obtained extrusion moldings was Soxhlet-extracted using methyl ethyl ketone (MEK) as the solvent to obtain 50 % by weight of the extraction residue. The weight-average molecular weight of the extraction residue was determined at 135°C by GPC using 1,2,4-trichlorobenzene as the solvent. The results are given in Table 2.

Comparative Example 7

Experimentation was carried out in a similar manner as described in Example 16, except that only the phosphorus-containing antioxidant was used as the antioxidant in an amount of 1.0 parts by weight. The results are given in Table 2.

Example 17

Fifty parts by weight of the syndiotactic polystyrene prepared in Preparation Example 1 were blended with 50 parts by weight of polycarbonate (having a viscosity-average molecular weight of 23,000, manufactured by Idemitsu Petrochemical Co.,Ltd. and available in the trade name of Idemitsu Polycarbonate A-2500) that was a thermoplastic resin, and the blend was dry-mixed with 0.5 part by weight of bis(2,6-di-tert-buty-4-methylphenyl)-pentaerythritol diphosphite serving as the phosphorus-containing antioxidant, 0.2 part by weight of tetrakis[methylene(3,5-di-tert-butyl-4-hydroxyhydrocinnamate)]methane as the phenolic antioxidant and 0.3 part by weight of pentaerythritol-tetrakis($\beta$-lauryl-thiopropionate) as the sulfur-containing antioxidant. Then, the mixture was kneaded together at 300°C for 2 minutes in the air and extruded. The weight-average molecular weight of the obtained extrusion moldings was determined at 135°C by GPC using 1,2,4-trichlorobenzene as the solvent. The resutls are given Table 2.

Example 18

Experimentation was carried out in a similar manner as described in Example 17, except that the thermoplastic resin used was one specified in Table 2. The results are given in Table 2.

Example 19

Fifty parts by weight of the syndiotactic polystyrene prepared in Preparation Example 1 were blended with 50 parts by weight of polyphenylene sulfide (manufactured by Phillips, Co., Ltd., and available under the trade name of Ryton P-4) that was a thermoplastic resin, and the blend was dry-mixed with 0.5 part by weight of bis(2,6-di-tert-butyl-4-methylphenyl)-pentaerythritol diphosphite serving as the phosphorus-containing antioxidant, 0.2 part by weight of tetrakis[methylene(3,5-di-tert.-butyl-4-hydroxyhydrocinnamate)]-methane as the phenolic antioxidant and 0.3 part by weight of pentaerythritol-tetrakis($\beta$-lauryl-thiopropionate) as the sulfur-containing antioxidant. Then, the mixture was kneaded together at 300°C for 2 minutes in air and extruded, and the obtained extrusion moldings was Soxhlet-extracted using 1,2,4-trichlorobenzene as the solvent to obtain 50 % by weight of extraction residue. The weight-average molecular weight of the extraction residue was determined at 135°C by GPC using 1,2,4-trichlorobenzene as the solvent. The results are given in Table 2.

Examples 20 and 21

Experiments were carried out in a similar manner as described in Example 19, except that the type and amount of the thermoplastic resins used were varied, as specified in Table 2. The results are given in Table 2.

14

Table 2

| | Resin component (parts by weight) | | Antioxidant (parts by weight) | | | Weight-average molecular weight |
| | s-PS *1 | Thermoplastic resin or Rubber | Phosphorus-containing antioxidant | Phenolic antioxidant | Sulfur-containing antioxidant | |
|---|---|---|---|---|---|---|
| Example 10 | 100 | 0 | 0.5 *8 | 0.2 *11 | 0.3 *13 | 870,000 |
| " 11 | 100 | 0 | 0.5 *9 | 0.2 *11 | 0.3 *13 | 830,000 |
| " 12 | 100 | 0 | 0.5 *10 | 0.2 *11 | 0.3 *13 | 860,000 |
| " 13 | 100 | 0 | 0.5 *8 | 0.2 *12 | 0.3 *13 | 840,000 |
| Comparative Example 6 | 100 | 0 | 1.0 *8 | - | - | 370,000 |
| Example 14 | 100 | 0 | 1.0 *8 | 0.5 *11 | 0.5 *13 | 920,000 |
| " 15 | 100 | 0 | 0.005 *8 | 0.0025 *11 | 0.0025 *13 | 790,000 |
| " 16 | 50 | a-PS *2 50 | 0.5 *8 | 0.2 *11 | 0.3 *13 | 900,000 |
| Comparative Example 7 | 50 | a-PS *2 50 | 1.0 *8 | - | - | 370,000 |
| Example 17 | 50 | PC *3 50 | 0.5 *8 | 0.2 *11 | 0.3 *13 | 840,000 |
| " 18 | 50 | PPO *4 50 | 0.5 *8 | 0.2 *11 | 0.3 *13 | 820,000 |
| " 19 | 50 | PPS *5 50 | 0.5 *8 | 0.2 *11 | 0.3 *13 | 800,000 |
| " 20 | 50 | PET *6 50 | 0.5 *8 | 0.2 *11 | 0.3 *13 | 880,000 |
| " 21 | 90 | MAS *7 10 | 0.5 *8 | 0.2 *11 | 0.3 *13 | 840,000 |

Footnote

*1 s-PS:     Syndiotactic polystyrene prepared in Preparation
             Example 1.

*2 a-PS:     Atactic polystyrene (manufactured by Idemitsu
             Petrochemical Co., Ltd., and available under the
             trade name of Idemitsu Polystyrene US-305).

*3 PC:       Polycarbonate (having a viscosity-average
             molecular weight of 23,000, manufactured by
             Idemitsu Petrochemical Co., Ltd., and available
             under the trade name of Idemitsu Polycarbonate A-2500).

*4 PPO:      Polyphenylene oxide (having a weight-average
             molecular weight of 7,200, manufactured by
             Scientific Polymer Products, Inc., and available
             under Catalog No. V-100).

*5 PPS:      Polyphenylene sulfide (manufacatured by Phillips,
             Co., Ltd., and available under the trade name of
             Ryton P-4).

*6 PET:      Polyethylene terephthalate (having an intrinsic
             viscosity [η] of 0.78 dℓ/g, manufactured by
             Mitsubishi Rayon, Co., Ltd., and available under
             the trade name of Dianite MA-523).

*7 MAS:      Copolymer of methyl methacrylate-n-butyl
             acrylate-styrene (manufactured by Rohm & Haas,
             Co., Ltd., and available under the trade name of
             Methaburene KM-330).

Phosphorus-containing antioxidant

*8:    Bis-(2,6-di-tert-butyl-4-methylphenyl)pentaerythritol

diphosphite

*9:    Tris(2,4-di-tert-butylphenyl)phosphite

*10:   Tetrakis(2,4-di-tert-butylphenyl)-4,4'-bisphenylene di-

phosphite

Phenolic antioxidant..

*11:   Tetrakis[methylene-(3,5-di-tert-buty-4-hydroxy-

hydrocinnamate)]methane

*12:   n-octadecyl-3-(4-hydroxy-3,5-di-tert-butylphenyl)-

propionate

Sulfur-containing antioxidant

*13:   Pentaerythritol-tetrakis(β-lauryl-thiopropionate)

Example 22

Fifty parts by weight of ABS resin (trade name: JSR ABS 15; a product of Japan Synthetic Rubber Co., Ltd.) as the rubber was mixed with 50 parts by weight of the syndiotactic polystyrene prepared in Preparation Example 1. The mixture was dry-blended with 0.5 part by weight of bis(2,6-di-tert-butyl-4-methylphenyl)-pentaerythritol diphosphite as the phosphorus-containing antioxidant and 0.2 part by weight of tetrakis[methylene(3,5-di-tert-butyl-4-hydroxyhydrocinnamate)]methane as the phenolic antioxidant. Then the mixture was kneaded at 300°C in the air for 2 minutes and extruded. The extrusion moldings thus obtained was subjected to Soxhlet's extraction with 1,2,4-trichlorobenzene as the solvent to obtain the soluble part. The weight average molecular weight of the soluble part was determined at 135°C by GPC using 1,2,4-trichlorobenzene as the solvent. The results are shown in Table 3.

Example 23

The same procedure as in Example 22 was repeated except that MAS resin (trade name: Methaburene KM-330; a product of Rohm & Haas Co.) was used as the rubber, 0.25 part by weight of bis(2,4-di-t-butylphenyl)-pentaerythritol diphosphite was used as the phosphorus-containing antioxidant and 0.3 part by weight of tetrakis[methylene (3,5-di-t-butyl-4-hydroxyhydrocinnamate)]methane was used as the phenolic antioxidant. The results are shown in Table 3.

Example 24

The same procedure as in Example 22 was repeated except that 25 parts by weight of polyethylene terephthalate (trade name: Dianite MA-523; a product of Mitsubishi Rayon Co., Ltd. having an intrinsic viscosity [η] of 0.78 dℓ/g) was used as the thermoplastic resin and 25 parts by weight of the same MAS resin as that used in Example 23 was used as the rubber. The results are shown in Table 3.

Comparative Example 8

The same procedure as in Example 22 was repeated except that 0.4 part by weight of tetrakis-[methylene(3,5-di-t-butyl-4-hydroxyhydrocinnamate)]methane was used as the phenolic antioxidant and no phosphorus-containing antioxidant was used. The results are shown in Table 3.

Comparative Example 9

The same procedure as in Example 23 was repeated except that neither phosphorus-containing antioxidant as the antioxidant nor phenolic antioxidant was used but 0.5 part by weight of 4,4'-thiobis(6-t-butyl-3-methylphenol) as the sulfur-having compound was used. The results are shown in Table 3.

## Table 3

| | resin Component (parts by weight) | | | Antioxidant (parts by weight) | | | Weight-average molecular weight |
|---|---|---|---|---|---|---|---|
| | s-PS [*1] | Rubber | | Phosphorus-containing antioxidant | Phenolic antioxidant | Sulfur-containing antioxidant | |
| Example 22 | 50 | ABS [*2] | 50 | 0.5 [*6] | 0.2 [*7] | – | 500,000 |
| " 23 | 50 | MAS [*3] | 50 | 0.25 [*5] | 0.3 [*7] | – | 480,000 |
| " 24 | 50 | PET [*4] / MAS [*3] | 25 / 25 | 0.25 [*5] | 0.3 [*7] | – | 570,000 |
| Comparative Example 8 | 50 | ABS [*2] | 50 | – | 0.4 [*7] | – | 230,000 |
| " 9 | 50 | MAS [*3] | 50 | – | – | 0.5 [*8] | 310,000 |

*1 s-PS:      syndiotactic polystyrene

*2 ABS:       acrylonitirile/butadiene/styrene copolymer

*3 MAS:       methyl methacrylate/n-butyl acrylate/styrene

              copolymer

*4 PET:       polyethylene terephthalate

              Phosphorus-containing antioxidant:

*5:           bis(2,4-di-t-butylphenyl)pentaerythritol

              diphosphite

*6:           bis(2,6-di-t-butyl-4-methylphenyl)pentaerythritol

              diphosphite

Phenolic antioxidant:

*7:           tetrakis[methylene(3,5-di-t-butyl-4-hydroxyhydro-

              cinnamate)]methane

Sulfur-containing antioxidant:

*8:           4,4'-thiobis(6-t-butyl-3-methylphenol).

Preparation Example 2

(Preparation of styrene polymer having syndiotactic structure)

In a reaction vessel 2 ℓ of toluene as the solvent, and 1 mmol of cyclopentadienyltitanium trichloride and 0.8 mol (in terms of aluminum) of methylaluminoxane as the catalyst components were placed. Then 3.6 ℓ of styrene was added thereto at 20°C and the polymerization reaction was conducted for 1 hour. After the reaction, the product was washed with a mixture of hydrochloric acid and methanol to decompose and thereby to remove the ash. After drying, 330 g of a polymer was obtained. The polymer was subjected to Soxhlet's extraction with methyl ethyl ketone to obtain 95 wt.% of the extraction residue. The polymer had a weight-average molecular weight of 290,000, number-average molecular weight of 158,000 and a melting point 270°C. In the analysis according to the nuclear magnetic resonance ($^{13}$C-NMR) of isotopic carbon, an absorption owing to the syndiotactic configuration was observed at 145.35 ppm. The syndiotacticity (pentad) calculated from the peak area was 96 %.

Example 25

Twenty g of the powdery styrene polymer prepared in Preparation Example 2 and haivng the syndiotactic configuration was stirred together with 140 mg of bis(2,4-di-t-butylphenyl)pentaerythritol diphosphite as the phosphorus-containing antioxidant and 20 mg of 2,6-di-t-butyl-4-methylphenol as the phenolic antioxidant in nitrogen atmosphere to obtain a mixture. The powdery mixture was placed in a metallic cylinder having a porous bottom, heated at 300°C to melt it and extruded through the pores of the bottom thereof by means of a piston. The fiber thus prepared was heat-treated at 210°C for 15 min.

The fiber had a diameter of 0.1 mm, tensile strength of 0.8 GPa, tensile modulus of 5 GPa and melting point of 270°C. The fiber was stable even when it was immersed in an acid, alkali or aqueous solution thereof such as sulfuric acid, 5 wt.% aqueous sulfuric acid solution or 10 wt. % aqueous sodium hydroxide solution, or in an organic solvent such as gasoline, heptane, ethanol or benzaldehyde. The melting point or the mechanical and physical properties thereof were unchanged by the immersion.

Example 26

A fiber was prepared from the styrene polymer having the syndiotactic configuration obtained in Preparation Example 2 in the same manner as in Example 25. The fiber was stretched three times at 150°C to obtain the oriented fiber. The properties of the fiber are shown in Table 4.

Example 27

(1) Preparation of styrene polymer having syndiotactic structure:

In a reaction vessel 180 mℓ of toluene as the solvent, and 0.15 mmol of tetraethoxytitanium and 15 mmol (in terms of aluminium) of methylaluminoxane as the catalyst components were placed. A mixture of 145 mmol of styrene and 15 mmol of p-methylstyrene was added thereto at 30°C and the polymerization reaction was conducted for 2 hours. After the reaction, the product was washed with a mixture of hydrochloric acid and methanol to decompose and thereby to remove the ash. After drying, 22 g of a styrene polymer was obtained. The polymer was subjected to Soxhlet's extraction with methyl ethyl ketone as the solvent to obtain 99 wt.% of the extraction residue. The polymer had a weight-average molecular weight of 960,000, number-average molecular weight of 460,000 and melting point of 225°C. It had a p-methyl-styrene content of 23 molar %. According to $^{13}$C-NMR analysis, it had absorption at 145.11 ppm, 145.22 ppm and 142.09 ppm like the copolymer described in U.S. Serial No. 138914 to reveal that it had a co-syndiotactic configuration.

(2) Preparation of fibrous molding:

The same procedure as in Example 26 was repeated except that the styrene polymer prepared in the above-described step (1) and having the syndiotactic configuration was heated to 250°C and melt-extruded to obtain the fiber stretched threefold. The properties of the obtained fiber are shown in Table 4.

Example 28

A stretched fiber was prepared in the same manner as in Example 26 except that a mixture of 18 g of the styrene polymer having the syndiotactic configuration prepared in Preparation Example 2, 2 g of an atactic polystyrene (trade name: Idemitsu Styrol US 300; a product of Idemitsu Petrochemical Co., Ltd. having a weight-average molecular weight of 370,000 and MI of 2 g/10 min), 60 mg of bis(2,4-di-t-butylphenyl)pentaerythritol diphosphite and 60 mg of 2,6-di-t-butyl-4-methylphenol were used. The properties of the fiber are shown in Table 4.

Example 29

A stretched fiber was prepared in the same manner as in Example 26 except that a mixture of 18 g of the styrene polymer having the syndiotactic configuration prepared in Preparation Example 2, 2 g of a polycarbonate (trade name: Idemitsu Polycarbonate A 3000; a product of Idemitsu Petrochemical Co., Ltd. having a viscosity-average molecular weight of 28,500 to 30,500), 100 mg of bis(2,4-di-t-butylphenyl)-pentaerythritol diphosphite and 20 mg of 2,6-di-t-butyl-4-methylphenol were used. The properties of the fiber are shown in Table 4.

Example 30

A stretched fiber was prepared in the same manner as in Example 26 except that a mixture of 20 g of the styrene polymer having the syndiotactic configuration prepared in Preparation Example 2 and 0.1 g of talc (trade name: Talc FFR; a product of Asada Seifun Co., Ltd. having an average particle diameter of 0.6 μm) were used. The properties of the fiber are shown in Table 4.

Example 31

(1) Preparation of styrene polymer having syndiotactic configuration:

In a reaction vessel 20 mℓ of toluene as the solvent, and 0.05 mmol of tetraethoxytitanium and 5 mmol (in terms of aluminium) of methylaluminoxane as the catalyst components were placed. Then 150 mℓ of styrene was added thereto at 40°C and the polymerization reaction was conducted for 4 hours. After the reaction, the product was washed with a mixture of hydrochloric acid and methanol to decompose and thereby to remove the ash. After drying, 25 g of polystyrene was obtained. The polymer was subjected to Soxhlet's extracton with methyl ethyl ketone as the solvent to obtain 95 wt.% of the extraction residue. The polymer had a weight-average molecular weight of 1,350,000, number-average molecular weight of 480,000 and melting point of 270°C. In the analysis according to $^{13}$C-NMR, an absorption owing to the syndiotactic configuration was observed at 145.35 ppm. The syndiotacticity (racemic pentad) calculated from the peak area was 96 %.

(2) Preparation of fibrous molding:

In a metallic pressure vessel 6 g of the styrene polymer having the syndiotactic configuration prepared in the above-described step (1), 1.8 mg of 2,6-di-t-butyl-4-methylphenol and 1.8 mg of bis(2,4-di-t-butylphenyl)-pentaerythritol diphosphite were placed. 200 g of p-xylene was added thereto and the mixture was stirred at 125°C in nitrogen atmosphere to obtain a solution. Then the pressure vessel was furnished with a nozzle and a filament in the form of a gel was extruded through the nozzle by nitrogen pressure. The filament was immersed in acetone for 15 min and then air-dried for 3 min. The wet fiber thus obtained was stretched twice at room temperature to obtain a stretched fiber. The properties of the fiber are shown in Table 4.

Example 32

(1) Preparation of styrene polymer having syndiotactic structure:

In a reaction vessel 80 mℓ of toluene as the solvent, and 0.178 mmol of tetraethoxytitanium and 17.8 mmol (in terms of aluminium) of methylaluminoxane as the catalyst were placed. Then 440 mℓ of styrene was added thereto at 20°C and the polymerization reaction was conducted for 7 hours. After the reacton, the product was washed with a mixture of hydrochloric acid and methanol to decompose and thereby to remove the ash. After drying, 6.8 g of polystyrene was obtained. The polymer was subjected to Soxhlet's extraction with methyl ethyl ketone as the solvent to obtain 98 wt.%. of the extraction residue. The polymer had a weight-average molecular weight of 3,040,000 number-average molecular weight of 1,220,000 and melting point of 270°C. In the analysis according to $^{13}$C-NMR, an absorption owing to the syndiotactic configuration was observed at 145.35 ppm. The syndiotacticity (racemic pentad) calculated from the peak area was 99 %.

(2) Preparation of fibrous molding:

The same procedure as in Example 31-(2) was repeated except that the styrene polymer having the syndiotactic configuration prepared in the above-described step (1) was stretched threefold at room temperature. The properties of the obtained fiber are shown in Table 4.

Example 33

The stretched fiber prepared in Example 32 was further stretched fivefold at 150°C. The properties of the obtained fiber are shown in Table 4.

Comparative Example 10

A fiber was prepared in the same manner as in Example 25 except that high-density polyethylene (trade name: Idemitsu Polyethylene 540 E; a product of Idemitsu Petrochemcial Co., Ltd. having an MI of 0.14 g/10 min) was molten at 180°C. The properties of the obtained fiber are shown in Table 4.

Comparative Example 11

In a metallic pressure vessel 6 g of high-density polyethylene (trade name: Hi-Zex Million 240M; a product of Mitsui Petrochemical Industries, Ltd. having a weight average molecular weight of 2,000,000) and 0.01 g of 2,6-di-t-butyl-4-methylphenol were placed. 200 g of p-xylene was added thereto and the mixture was stirred at 125°C in nitrogen atmosphere to obtain a solution. Then the pressure vessel was furnished with a nozzle and a filament in the form of a gel was extruded through the nozzle by nitrogen pressure. The filament was immersed in acetone for 15 min and then air-dried for 3 min. The wet fiber thus obtained was stretched threefold at room temperature to obtain a stretched fiber. The properties of the fiber are shown in Table 4.

Comparative Example 12

A fiber was prepared in the same manner as in Example 25 except that nylon-6 (trade name: UBE Nylon 1013 B; a product of Ube Industries, Ltd.) molten at 230°C was used. When the obtained fiber was immersed in water, steam, dilute aqueous alkali solution and dilute aqueous sulfuric acid solution, the tensile strength was reduced from 0.075 GPa to 0.05 GPa by about 30 % and the tensile modulus was reduced from 2.4 GPa to 0.75 GPa by about 60 %.

Table 4

| | Resin composition (parts by weight) | | | | | | Spinning method | Stretching ratio (times) |
| | Syndiotactic polystyrene | | Thermoplastic resin or Inorganic filler | | Antioxidant | | | |
| | | | | | Phosphorus *1 -containing | Phenolic *2 | | |
|---|---|---|---|---|---|---|---|---|
| Example 25 | $\overline{Mw}$ 280,000 | 100 | – | – | 0.7 | 0.1 | melt spinning | – |
| " 26 | " | " | – | – | 0.7 | 0.1 | " | 3 |
| " 27 | $\overline{Mw}$ 960,000 | " | – | – | 0.7 | 0.1 | " | 3 |
| " 28 | $\overline{Mw}$ 280,000 | 90 | a-PS*5 | 10 | 0.3 | 0.3 | " | 3 |
| " 29 | " | " | PC *6 | 10 | 0.5 | 0.1 | " | 3 |
| " 30 | " | 100 | Talc | 0.5 | 0.7 | 0.1 | " | 3 |
| " 31 | $\overline{Mw}$ 1,350,000 | " | – | – | 0.3 | 0.3 | wet spinning | 2 |
| " 32 | $\overline{Mw}$ 3,040,000 | " | – | – | 0.3 | 0.3 | " | 3 |
| " 33 | " | " | – | – | 0.3 | 0.3 | " | 15 |
| Comparative Example 10 | – | – | PE *7 | 100 | 0.7 | 0.1 | melt spinning | – |
| " 11 | – | – | PE *8 | " | – | 0.16 | wet spinning | 3 |
| " 12 | – | – | nylon-6 | " | 0.7 | 0.1 | melt spinning | – |

EP 0 291 915 B1

## Table 4 (continued)

| | Diameter of fibrous molding (mm) | Melting point (°C) | Influences of acids, alkalis or organic solvents | Mechanical properties of fibrous molding | |
| --- | --- | --- | --- | --- | --- |
| | | | | Tensile strength (GPa) *3 | Modulus of elasticity in tension (GPa) *4 |
| Example 25 | 0.1 | 270 | None | 0.8 | 5 |
| " 26 | 0.06 | 271 | " | 0.12 | 12 |
| " 27 | " | 225 | " | 0.13 | 13 |
| " 28 | " | 250 | " | 0.12 | 11 |
| " 29 | " | 263 | " | 0.11 | 11 |
| " 30 | " | 270 | " | 0.14 | 14 |
| " 31 | 0.07 | 271 | " | 0.09 | 9 |
| " 32 | 0.06 | 271 | " | 0.15 | 16 |
| " 33 | 0.026 | 272 | " | 0.22 | 25 |
| Comparative Example 10 | 0.1 | 135 | " | 0.5 | 4 |
| " 11 | 0.06 | 137 | " | 0.9 | 12 |
| " 12 | 0.1 | 215 | Reduction of mechanical strength | 0.075 (0.05) | 2.4 (0.75) |

EP 0 291 915 B1

Footnote

*1 Phosphorus-containing antioxidant

bis(2,4-di-t-butylphenyl)pentaerythritol diphosphite

*2 Phenolic antioxidant

2,6-di-tert-butyl-4-methylphenol

*3 Tensile strength was determined according to ASTM

D 3544.

*4 Tensile modulus was determined according to ASTM D

3544.

*5 Atactic polystyrene

*6 Polycarbonate

*7 High-density polyethylene

*8 High-density polyethylene

Example 34

Twenty parts by weight of the polystyrene prepared in Preparation Example 2 and having the syndiotactic configuration was mixed with 80 parts by weight of a polycarbonate (trade name: Idemitsu Polycarbonate A3000; a product of Idemitsu Petrochemical Co., Ltd. having a viscosity-average molecular weight of 28,500 to 30,500 and a density of 1.20 $g/cm^3$) as the thermoplastic resin. Then 0.7 part by weight of bis(2,4-di-t-butylphenyl)-pentaerythritol diphosphite as the phosphorus-containing antioxidant and 0.1 part by weight of 2,6-di-t-butyl-4-methylphenol as the phenolic antioxidant were mixed therein under stirring in nitrogen atmosphere. The mixture was extruded by means of a twin screw extruder having a diameter of 40 mm to obtain pellets.

The pellets were fed in a single screw extruder having a diameter of 40 mm and a T-die at an end thereof to conduct the extrusion at a cylinder temperature of 290°C, T-die temperature of 300°C and rate of 4.2 kg/h to obtain a sheet having a thickness of 600 μm. The surface temperature of a sheet-cooling roll was 55°C.

The thus obtained sheet to be stretched was transparent and had a density of 1.10 $g/cm^3$ and a glass transition temperature of 110°C.

Then, the sheet was uniaxially stretched at 108°C at a stretching ratio of 4.5 times to obtain a stretched film, which was subjected to heat treatment under tension at 190°C for 20 sec. The physical properties of the obtained uniaxially stretched film are shown in Table 5.

Example 35

The same procedure as in Example 34 was repeated except that the amount of the polycarbonate was altered to 50 parts by weight and that of the polystyrene prepared in Preparation Example 2 and having the syndiotactic configuration was altered to 50 parts by weight to obtain a sheet to be stretched (hereinafter referred to non-stretched sheet).

Then the sheet was stretched and was subjected to heat tretament in the same manner as in Example 34 to obtain a stretched film. The physical properties of the obtained uniaxially stretched film are shown in Table 5.

Example 36

The same procedure as in Example 34 was repeated except that the amounts of the polycarbonate and the polystrene prepared in Preparation Example 2 and having the syndiotactic configuration were altered to 20 and 80 parts by weight, respectively. The results are shown in Table 5.

Example 37

The same procedure as in Example 34 was repeated except that 80 parts by weight of the polycarbonate was replaced with 50 parts by weight of polyethylene terephthalate (trade name: Dianite MA 523; a product of Mitsubishi Rayon Co., Ltd. having an intrinsic viscosity [$\eta$] of 0.78 d$\ell$/g, melting point of 255°C and density of 1.34 g/cm$^3$), that the amount of the polystyrene having the syndiotactic configuration prepared in Preparation Example 2 was altered to 50 parts by weight and that 10 parts by weight of polystyrene-grafted polybutylene terephthalate (trade name: HS-6; a product of Toa Gosei Chemical Industry Co., Ltd.) was used as the compatibilizing agent. The results are shown in Table 5.

Example 38

The same procedure as in Example 34 was repeated except that 80 parts by weight of the polycarbonate was replaced with 50 parts by weight of an atactic polystyrene (trade name: Idemitsu Styrol US 300; a product of Idemitsu Petrochemcial Co., Ltd. having a weight-average molecualr weight of 370,000, melt index of 2 g/10 min and density of 1.05 g/cm$^3$) and that the amount of the polystyrene prepared in Preparation Example 2 and having the syndiotactic configuration was altered to 50 parts by weight. The results are shown in Table 5.

Example 39

The same procedure as in Example 34 was repeated except that 80 parts by weight of the polycarbonate was replaced with 50 parts by weight of polyphenylene oxide having a weight-average molecular weight of 7.200 (a product of SCIENTIFIC POLYMER PRODUCTS INC., Catalog No. V-100) and that the amount of the polystyrene prepared in Preparation Example 2 and having the syndiotactic configuration was altered to 50 parts by weight. The results are shown in Table 5.

Example 40

The same procedure as in Example 34 was repeated except that 80 parts by weight of the polycarbonate was replaced with 50 parts by weight of ABS resin (trade name: JSR ABS 15; a product of Japan Synthetic Rubber Co., Ltd.) and that the amount of the polystyrene prepared in Preparation Example 2 and having the syndiotactic configuration was altered to 50 parts by weight. The results are shown in Table 5.

Example 41

The same procedure as in Example 34 was repeated except that 80 parts by weight of the polycarbonate was replaced with 50 parts by weight of methyl methacrylate/n-butyl acrylate/styrene copolymer (trade name: methaburene KM 330; a product of Rohm & Haas Co.) and that the amount of the polystyrene prepared in Preparation Example 2 and having the syndiotactic configuration was altered to 50 parts by weight. The results are shown in Table 5.

Example 42

The same procedure as in Example 34 was repeated except that the polycarbonate was not used and that 0.4 part by weight of talc (trade name: Talc FFR; a product of Asada Seifun Co., Ltd. having an average particle diameter of 0.6 $\mu$m) was used as an inorganic filler for 100 parts by weight of the polystyrene prepared in Preparation Example 2 and having the syndiotactic configuration. The results are shown in Table 5.

Example 43

The sheet prepared in Example 42 to be stretched was stretched both simultaneously at a draw ratio of 4 x 4 to obtain a biaxially stretched, film. This film had an elongation at break of 55 %.

The biaxially stretched film was subjected to heat treatment under tension at 210°C for 20 sec. The physical properties of the obtained biaxially stretched film are shown in Table 5.

Example 44

The same procedure as in Example 38 was repeated except that 0.4 part by weight of the same talc as in Example 42 was added. The results are shown in Table 5.

Example 45

The same procedure as in Example 34 was repeated except that 50 parts by weight of the polystyrene prepared in Preparation Example 2 and having the syndiotactic configuration, 25 parts by weight of the same atactic polystyrene as in Example 38 and 25 parts by weight of the same methyl methacrylate / n-butyl acrylate / styrene copolymer as in Example 41 were used. The results are shown in Table 5.

Comparative Example 13

The non-stretched sheet prepared in Example 35 was subjected to heat treatment (heat fixation) under tension at 190°C for 20 sec, omitting the stretching operation. The physical properties of the obtained sheet are shown in Table 5.

Comparative Example 14

The non-stretched sheet prepared in Example 37 was subjected to heat treatment under tension at 190°C for 20 sec, omitting the stretching operation. The physical properties of the obtained sheet are shown in Table 5.

Comparative Exmaple 15

The non-stretched sheet prepared in Example 38 was subjected to heat treatment under tension at 170°C for 20 sec, omitting the stretching operation. The physical properties of the obtained sheet are shown in Table 5.

Comparative Example 16

The non-stretched sheet prepared in Example 39 was subjected to heat treatment under tension at 180°C for 20 sec, omitting the stretching operation. The physical properties of the obtained sheet are shown in Table 5.

Comparative Example 17

The non-stretched sheet prepared in Example 40 was subjected to heat treatment under tension at 160°C for 20 sec, omitting the stretching operation. The physical properties of the obtained sheet are shown in Table 5.

Comparative Example 18

The non-stretched sheet prepared in Example 41 was subjected to heat treatment under tension at 200°C for 20 sec, omitting the stretching operation. The physical properties of the obtained sheet are shown in Table 5.

Comparative Example 19

The non-stretched sheet prepared in Example 42 was subjected to heat treatment under tension at 200°C for 20 sec, omitting the stretching operation. The physical properties of the obtained sheet are shown in Table 5.

Comparative Example 20

The same procedure as in Example 35 was repeated except that the polystyrene prepared in Preparation Example 2 and having the syndiotactic configuration was replaced with the same atactic polystyrene as in Example 38. The results are shown in Table 5.

Comparative Example 21

A sheet of the same atactic polystyrene as in Example 38 was stretched in the same manner as in Example 34. The heat treatment was not conducted. The physical properties of the oriented film thus obtained are shown in Table 5.

Comparative Example 22

The same procedure as in Example 42 was repeated except that the amount of the talc was altered to 25 parts by weight. The sheet could not be stretched but was broken.

Comparative Example 23

The non-stretched sheet prepared in Example 45 was subjected to heat treatment under tension at 190°C for 20 sec. The physical properties of the film thus obtained are shown in Table 5.

## Table 5

EP 0 291 915 B1

(Parts by weight)

| | | Component (A) | | Component (B) *2 | Component (C) | | Stretching ratio (times) longi-tudinal | width |
|---|---|---|---|---|---|---|---|---|
| Example | 34 | SPS/PC | 20/80 | | – | – | 4.5 | – |
| " | 35 | " | 50/50 | | – | – | " | – |
| " | 36 | " | 80/20 | | – | – | " | – |
| " | 37 | SPS/PET | 50/50 | | – | – | " | – |
| " | 38 | SPS/aPS | " | | – | – | " | – |
| " | 39 | SPS/PPO | " | | – | – | " | – |
| " | 40 | SPS/ABS | " | | – | – | " | – |
| " | 41 | SPS/MAS | " | | – | – | " | – |
| " | 42 | SPS | 100 | | Talc | 0.4 | " | – |
| " | 43 | " | " | | " | " | 4 | 4 |
| " | 44 | SPS/aPS | 50/50 | | " | " | " | – |
| " | 45 | SPS/aPS/MAS | 50/25/25 | | – | – | 4.5 | – |
| Comparative Example | 13 | SPS/PC | 50/50 | A: 0.7 B: 0.1 | – | – | – | – |
| " | 14 | SPS/PET | " | | – | – | – | – |
| " | 15 | SPS/aPS | " | | – | – | – | – |
| " | 16 | SPS/PPO | " | | – | – | – | – |
| " | 17 | SPS/ABS | " | | – | – | – | – |
| " | 18 | SPS/MAS | " | | – | – | – | – |
| " | 19 | SPS | 100 | | Talc | 0.4 | – | – |
| " | 20 | aPS/PC | 50/50 | | – | – | 4.5 | – |
| " | 21 | aPS | 100 | | – | – | " | – |
| " | 22 | SPS | " | | Talc | 25 | " | – |
| " | 23 | SPS/aPS/MAS | 50/25/25 | | – | – | – | – |

Table 5 (continued)

| | | Tensile modulus (kg/cm$^2$) | | Tensile strength (kg/cm$^2$) | | Thermal deformation temperature (°C) |
|---|---|---|---|---|---|---|
| | | longi-tudinal | width | longi-tudinal | width | |
| Example | 34 | 72,200 | 27,000 | 1420 | 600 | 170 |
| " | 35 | 96,700 | 36,100 | 1440 | 610 | 190 |
| " | 36 | 99,300 | 32,400 | 1300 | 540 | 205 |
| " | 37 | 99,000 | 32,700 | 1240 | 510 | 200 |
| " | 38 | 105,000 | 38,200 | 1430 | 650 | 175 |
| " | 39 | 112,000 | 40,100 | 1550 | 710 | 183 |
| " | 40 | 62,500 | 26,500 | 1300 | 600 | 161 |
| " | 41 | 108,000 | 39,500 | 1320 | 540 | 241 |
| " | 42 | 189,000 | 70,600 | 1270 | 530 | 253 |
| " | 43 | 72,000 | 70,300 | 1180 | 1160 | 257 |
| " | 44 | 115,000 | 38,000 | 1380 | 650 | 186 |
| " | 45 | 107,000 | 38,900 | 1380 | 600 | 203 |
| Comparative Example | 13 | 27,600 | | 650 | | 170 |
| " | 14 | 29,200 | | 580 | | 190 |
| " | 15 | 31,900 | | 650 | | 160 |
| " | 16 | 34,000 | | 700 | | 170 |
| " | 17 | 26,000 | | 560 | | 150 |
| " | 18 | 34,000 | | 560 | | 220 |
| " | 19 | 57,200 | | 540 | | 230 |
| " | 20 | 73,500 | 27,200 | 1090 | 540 | 120 |
| " | 21 | 67,000 | 27,500 | 1100 | 600 | 80 |
| " | 22 | The sheet could not be stretched but was broken | | | | |
| " | 23 | 32,000 | | 590 | | 185 |

Footnote

*1  SPS:  Syndiotactic polystyrene

PC :  Polycarbonate

PET:  Polyethylene terephthalate

aPS:  Atactic polystyrene

PPO:  Polyphenyleneoxide

ABS:  ABS resin (acrylonitrile/butadiene/styrene

copolymer)

MAS:  Methyl methacrylate/n-butyl acrylate/styrene

copolymer

*2  Antioxidant

A:  bis(2,4-di-t-butylphenyl)pentaerythritol

diphosphite

B:  2,6-di-t-butyl-4-methylphenol

*3  Determined by Thermal Mechanical Analysis

## Claims

1. A styrene-based resin composition comprising
   (A) as resin component a styrene-based polymer having mainly a syndiotactic configuration and
   (B) as antioxidant component a phosphorus-containing antioxidant selected from the group consisting of bis-(2,4-di-tert-butylphenyl)pentaerythritol diphosphite, bis-(2,6-di-tert-butyl-4-methylphenyl)-pentaerythritol diphosphite, tris-(2,4-di-tert-butylphenyl)phosphite and tetrakis-(2,4-di-tert-butylphenyl)-4,4'-bisphenylene diphosphite, and trialkyl phenol as a phenolic antioxidant wherein the total amount of the phosphorus-containing antioxidant and the phenolic antioxidant compounded is 0,005 to 5 parts by weight per 100 parts by weight of the styrene-based polymer, and the weight ratio of the phosphorus-containing antioxidant to the phenolic antioxidant is 100:1 to 0,3:1.

2. The composition according to claim 1 wherein the antioxidant component (B) further contains a sulfur-containing antioxidant and the amount of the sulfur-containing antioxidant compounded is 0,0001 to 1 part by weight per 100 parts by weight of the styrene-based polymer.

3. The composition according to claim 2 wherein the resin component (A) further contains a thermoplastic resin and/or rubber, and the amount of the thermoplastic resin and/or rubber compounded is 1 to 200 parts by weight per 100 parts by weight of the styrene-based polymer.

4. The composition according to claim 1 wherein the resin component (A) further contains rubber and the amount of the rubber compounded is 1 to 200 parts by weight per 100 parts by weight of the styrene-based polymer.

5. The composition according to claim 4 wherein the resin component (A) further contains a thermoplastic resin and the amount of the thermoplastic resin compounded is 1 to 200 parts by weight per 100 parts by weight of the styrene-based polymer.

6. A fibrous molding produced by spinning a styrene-based resin composition comprising (A) as resin component a styrene-based polymer having mainly a syndiotactic configuration and (B) as antioxidant component a phosphorus-containing antioxidant selected from the group consisting of bis-(2,4-di-tert-butylphenyl)pentaerythritol diphosphite, bis-(2,6-di-tert-butyl-4-methylphenyl)pentaerythritol diphosphite, tris-(2,4-di-tert-butylphenyl)phosphite and tetrakis-(2,4-di-tert-butylphenyl)-4,4'-bisphenylene diphosphite and trialkyl phenol as a phenolic antioxidant wherein the total amount of the phosphorus-containing antioxidant and the phenolic antioxidant is 0,005 to 5 parts by weight per 100 parts by weight of the styrene-based polymer, and the weight ratio of the phosphorus-containing antioxidant to the phenolic antioxidant is 100:1 to 0,3:1.

7. A molding produced by stretching a styrene-based resin composition comprising (A) as resin component a styrene-based polymer having mainly a syndiotactic configuration and (B) as antioxidant component a phosphorus-containing antioxidant selected from the group consisting of bis-(2,4-di-tert-butylphenyl)pentaerythritol diphosphite, bis-(2,6-di-tert-butyl-4-methylphenyl)pentaerythritol diphosphite, tris-(2,4-di-tert-butylphenyl)phosphite and tetrakis-(2,4-di-tert-butylphenyl)-4,4'-bisphenylene diphosphite and trialkyl phenol as a phenolic antioxidant wherein the total amount of the phosphorus-containing antioxidant and the phenolic antioxidant compounded is 0,005 to 5 parts by weight per 100 parts by weight of the styrene-based polymer, and the weight ratio of the phosphorus-containing antioxidant to the phenolic antioxidant is 100:1 to 0,3:1.

8. The molding according to claim 7 wherein the resin component (A) further contains a thermoplastic resin and/or rubber.

9. The molding according to claim 7, wherein the styrene-based resin composition further contains (C) an inorganic filler.

10. The molding according to claim 8, wherein the styrene-based resin composition further contains (C) an inorganic filler.

**Patentansprüche**

1. Eine Harzzusammensetzung auf Styrolbasis, umfassend
   (A) als Harzkomponente ein Polymer auf Styrolbasis mit im wesentlichen syndiotaktischer Konfiguration und
   (B) als Antioxidans-Komponente ein phosphorhaltiges Antioxidans, ausgewählt aus der aus Bis-(2,4-di-tert.-butylphenyl)pentaerythritoldisphosphit, Bis-(2,6-di-tert.-butyl-4-methylphenyl)pentaerythritoldisphoshit, Tris-(2,4-di-tert-butylphenyl)phosphit und Tetrakis-(2,4-di-tert.-butylphenyl)-4,4'-bisphenylendiphosphit bestehenden Gruppe und Trialkylphenol als phenolisches Antioxidans, wobei die Gesamtmenge an compoundiertem phosphorhaltigem Antioxidans und phenolischem Antioxidans 0,005 bis 5 Gewichtsteile pro 100 Gewichtsteile des Polymeren auf Styrolbasis beträgt und das Gewichtsverhältnis des phosphorhaltigen Antioxidans zum phenolischen Antioxidans 100 : 1 bis 0,3 : 1 beträgt.

2. Die Zusammensetzung entsprechend Anspruch 1, wobei die Antioxidans-Komponente (B) darüber hinaus ein schwefelhaltiges Antioxidans enthält, und die Menge des compoundierten schwefelhaltigen Antioxidans 0,0001 bis 1 Gewichtsteil pro 100 Gewichtsteile des Polymeren auf Styrolbasis beträgt.

3. Die Zusammensetzung entsprechend Anspruch 2, wobei die Harzkomponente (A) darüber hinaus ein thermoplastisches Harz und/oder Kautschuk enthält, und die Menge des compoundierten thermoplastischen Harzes und/oder Kautschuk 1 bis 200 Gewichtsteile pro 100 Gewichtsteile des Polymeren auf Styrolbasis beträgt.

4. Die Zusammensetzung entsprechend Anspruch 1, wobei die Harzkomponente (A) darüber hinaus Kautschuk enthält, und die Menge des compoundierten Kautschuk 1 bis 200 Gewichtsteile pro 100

EP 0 291 915 B1

Gewichtsteile des Polymeren auf Styrolbasis beträgt.

**5.** Die Zusammensetzung entsprechend Anspruch 4, wobei die Harzkomponente (A) darüber hinaus ein thermoplastisches Harz enthält, und die Menge des compoundierten thermoplastischen Harzes 1 bis 200 Gewichtsteile pro 100 Gewichtsteile des Polymeren auf Styrolbasis beträgt.

**6.** Ein faseriges Formteil, hergestellt durch Spinnen einer Harzzusammensetzung auf Styrolbasis, umfassend (A) als Harzkomponente ein Polymer auf Styrolbasis mit im wesentlichen syndiotaktischer Konfiguration und (B) als Antioxidans-Komponente ein phosphorhaltiges Antioxidans, ausgewählt aus der aus Bis-(2,4-di-tert.-butylphenyl)pentaerythritoldisphosphit, Bis-(2,6-di-tert.-butyl-4-methylphenyl)-pentaerythritoldisphoshit, Tris-(2,4-di-tert-butylphenyl)phosphit und Tetrakis-(2,4-di-tert.-butylphenyl)-4,4'-bisphenylendiphosphit bestehenden Gruppe und Trialkylphenol als phenolisches Antioxidans, wobei die Gesamtmenge des phosphorhaltigem Antioxidans und des phenolischen Antioxidans 0,005 bis 5 Gewichtsteile pro 100 Gewichtsteile des Polymeren auf Styrolbasis beträgt und das Mengenverhältnis des phosphorhaltigen Antioxidans zum phenolischen Antioxidans 100 : 1 bis 0,3 : 1 beträgt.

**7.** Ein Formteil, hergestellt durch Strecken einer Harzzusammensetzung auf Styrolbasis, umfassend (A) als Harzkomponente ein Polymer auf Styrolbasis mit im wesentlichen syndiotaktischer Konfiguration und (B) als Antioxidans-Komponente ein aus der aus Bis-(2,4-di-tert.-butylphenyl)-pentaerythritoldisphosphit, Bis-(2,6-di-tert.-butyl-4-methylphenyl)pentaerythritoldisphoshit, Tris-(2,4-di-tert-butylphenyl)phosphit und Tetrakis-(2,4-di-tert.-butylphenyl)-4,4'-bisphenylefldiphosphit bestehenden Gruppe ausgewähltes phosphorhaltiges Antioxidans und Trialkylphenol als phenolisches Antioxidans, wobei die Gesamtmenge an compoundiertem phosphorhaltigem Antioxidans und phenolischem Antioxidans 0,005 bis 5 Gewichtsteile pro 100 Gewichtsteile des Polymeren auf Styrolbasis beträgt und das Gewichtsverhältnis des phosphorhaltigen Antioxidans zum phenolischen Antioxidans 100 : 1 bis 0,3 : 1 beträgt.

**8.** Das Formteil entsprechend Anspruch 7, wobei die Harzkomponente (A) darüber hinaus ein thermoplastisches Harz und/oder Kautschuk enthält.

**9.** Das Formteil entsprechend Anspruch 7, wobei die Harzzusammensetzung auf Styrolbasis darüber hinaus (C) einen anorganischen Füllstoff enthält.

**10.** Das Formteil entsprechend Anspruch 8, wobei die Harzzusammensetzung auf Styrolbasis darüber hinaus (C) einen anorganischen Füllstoff enthält.

**Revendications**

**1.** Composition de résine à base de styrène comprenant
(A), comme composant de résine, un polymère à base de styrène présentant principalement une configuration syndiotactique, et
(B), comme composant antioxydant, un antioxydant contenant du phosphore choisi dans le groupe constitué du bis-(2,4-di-tertiobutylphényl)pentaérythritol diphosphite, du bis-(2,6-di-tertiobutyl-4-méthylphényl)-pentaérythritol diphosphite, du tris-(2,4-di-tertiobutylphényl)phosphite et du tétrakis-(2,4-di-tertiobutylphényl)-4,4'-bisphénylène diphosphite, et un trialkyl phénol comme antioxydant phénolique, dans laquelle la quantité totale de l'antioxydant contenant du phosphore et de l'antioxydant phénolique conbinés est de 0,005 à 5 parties en poids pour 100 parties en poids du polymère à base de styrène, et le rapport pondéral de l'antioxydant contenant du phosphore à l'antioxydant phénolique est de 100:1 à 0,3:1.

**2.** Composition selon la revendication 1, dans laquelle le composant antioxydant (B) contient en outre un antioxydant contenant du soufre, et la quantité de l'antioxydant contenant du soufre combiné est de 0,0001 à 1 partie en poids pour 100 parties en poids du polymère à base de styrène.

**3.** Composition selon la revendication 2, dans laquelle le composant de résine (A) contient en outre une résine thermoplastique et/ou du caoutchouc, et la quantité de la résine thermoplastique et/ou du caoutchouc mélange est de 1 à 200 parties en poids pour 100 parties en poids du polymère à base de styrène.

34

4. Composition selon la revendication 1, dans laquelle le composant de résine (A) contient en outre du caoutchouc, et la quantité du caoutchouc mélangé est de 1 à 200 parties en poids pour 100 parties en poids du polymère à base de styrène.

5. Composition selon la revendication 4, dans laquelle le composant de résine (A) contient en outre une résine thermoplastique, et la quantité de la résine thermoplastique mélangée est de 1 à 200 parties en poids pour 100 parties en poids du polymère à base de styrène.

6. Objet moulé fibreux obtenu par filage d'une composition de résine à base de styrène comprenant (A), comme composant de résine, un polymère à base de styrène présentant principalement une configuration syndiotactique, et (B), comme composant antioxydant, un antioxydant contenant du phosphore choisi dans le groupe constitué du bis-(2,4-di-tertiobutylphényl)-pentaérythritol diphosphite, du bis-(2,6-di-tertiobutyl-4-méthylphényl)pentaérythritoldiphosphite, du tris-(2,4-di-tertiobutylphényl)phosphite et du tétrakis-(2,4-di-tertiobutylphényl)-4,4'-bisphénylène diphosphite, et un trialkyl phénol comme antioxydant phénolique, dans lequel la quantité totale de l'antioxydant contenant du phosphore et de l'antioxydant phénolique est de 0,005 à 5 parties en poids pour 100 parties en poids du polymère à base de styrène, et le rapport pondéral de l'antioxydant contenant du phosphore à l'antioxydant phénolique est de 100:1 à 0,3:1.

7. Objet moulé obtenu en étirant une composition de résine à base de styrène comprenant (A), comme composant de résine, un polymère à base de styrène présentant principalement une configuration syndiotactique, et (B), comme composant antioxydant, un antioxydant contenant du phosphore choisi dans le groupe constitué du bis-(2,4-di-tertiobutylphényl)-pentaérythritol diphosphite, du bis-(2,6-di-tertiobutyl-4-méthylphényl)pentaérythritoldiphosphite, du tris-(2,4-di-tertiobutylphényl)phosphite et du tétrakis-(2,4-di-tertiobutylphényl)-4,4'-bisphénylène diphosphite, et un trialkyl phénol comme antioxydant phénolique, dans lequel la quantité totale de l'antioxydant contenant du phosphore et de l'antioxydant phénolique combinés est de 0,005 à 5 parties en poids pour 100 parties en poids du polymère à base de styrène, et le rapport pondéral de l'antioxydant contenant du phosphore à l'antioxydant phénolique est de 100:1 à 0,3:1.

8. Objet moulé selon la revendication 7, dans lequel la composition de résine (A) contient en outre une résine thermoplastique et/ou du caoutchouc.

9. Objet moulé selon la revendication 7, dans lequel la composition de résine à base de styrène contient en outre (C) une charge minérale.

10. Objet moulé selon la revendication 8, dans lequel la composition de résine à base de styrène contient en outre (C) une charge minérale.